# EUROPÄISCHE PATENTSCHRIFT

(11) **EP 3 723 963 B1**
(45) Veröffentlichungstag und Bekanntmachung des Hinweises auf die Patenterteilung: **18.05.2022**
(21) Anmeldenummer: 18804592.6
(22) Anmeldetag: 16.11.2018
(51) Int. Cl.: B29C 53/62, B29C 53/68, B60G 7/00

(54) **VERFAHREN ZUM HERSTELLEN EINES BAUELEMENTS UND BAUELEMENT**
METHOD FOR PRODUCING A COMPONENT, AND COMPONENT
PROCÉDÉ DE FABRICATION D'UN COMPOSANT ET COMPOSANT

(30) Priorität: 13.12.2017 DE 102017222579
(43) Veröffentlichungstag der Anmeldung: 21.10.2020
(73) Patentinhaber: ZF Friedrichshafen AG, 88046 Friedrichshafen (DE); Schäfer MWN GmbH, 71272 Renningen (DE)
(72) Erfinder: MÜLLER, Ingolf, 76872 Minfeld (DE); BÜRGMANN, Manfred, 88213 Ravensburg (DE); HEIMANN, Jens, 88719 Stetten (DE); STIEGLITZ, Andre, 49086 Osnabrück (DE); SOHL, Carsten, 7000 Fredericia (DK); HÖRTDÖRFER, Valentin, 70569 Stuttgart (DE)
(86) Internationale Anmeldenummer: PCT/EP2018/081573
(87) Internationale Veröffentlichungsnummer: WO 2019/115146

(56) Entgegenhaltungen:
- EP-A1- 0 391 222
- EP-A2- 2 703 129
- WO-A1-2009/062749
- WO-A1-2017/202614
- WO-A2-91/04843
- US-A- 4 750 960

## Beschreibung

Die vorliegende Erfindung betrifft ein Verfahren zum Herstellen eines Bauelements mit den Merkmalen nach Anspruch 1, und ein solches Bauelement mit den Merkmalen nach Anspruch 14.

Vierpunktlenker werden insbesondere in Nutzfahrzeugen verwendet, um eine Starrachse federbar in einem Fahrzeugrahmen zu führen. Der Vierpunktlenker ist dabei für die Querführung und die Längsführung der Achse verantwortlich. Weiterhin erfüllt der Vierpunktlenker die Funktion eines Stabilisators. Dreipunktlenker werden sowohl in Nutzfahrzeugen als auch in Personenkraftwagen verwendet und dienen bei einer Einzelradaufhängung der Verbindung des Radträgers mit der Karosserie. Zweipunktlenker oder Achsstreben werden als Verbindungsstangen genutzt, um eine Fahrzeugachse an eine Karosserie anzubinden. Derartige Zweipunktlenker können einfache Lastsituationen abbilden, z. B. Zug-/Druckbelastung.

Aus PCT/EP2017/061257 ist ein Vierpunktlenker für eine Radaufhängung eines Fahrzeugs und ein Herstellungsverfahren für diesen Vierpunktlenker bekannt. Dieser wird mittels eines 3D-Roboter-Wickelverfahrens hergestellt. Jedoch schweigt sich diese Anmeldung dazu aus, wie genau Steifigkeiten und Festigkeiten des Vierpunktlenkers in diesem Wickelverfahren gezielt eingestellt werden können.

Der vorliegenden Erfindung liegt ausgehend vom Stand der Technik die Aufgabe zu Grunde, eine verbesserte Möglichkeit zur Herstellung eines Bauelements mit einem 3D-Roboter-Wickelverfahren vorzuschlagen.

Die vorliegende Erfindung schlägt ausgehend von der vorgenannten Aufgabe ein Verfahren zum Herstellen eines Bauelements nach Anspruch 1, und ein Bauelement nach Anspruch 14 vor. Weitere vorteilhafte Ausgestaltungen und Weiterbildungen gehen aus den Unteransprüchen hervor.

Bei einem Verfahren zum Herstellen eines Bauelements mittels eines 3D-Wickelverfahrens wird oder werden auf einem Kern ein Faden oder mehrere Parallelfäden aus einem Faserkunststoffverbundmaterial (FKV) in einer Kombination von mehreren unterschiedlichen Wickelmustern abgelegt. Dabei ist jeder Faden vorimprägniert. Jedes Wickelmuster beeinflusst wenigstens eine mechanische Eigenschaft des Bauelements. Die mechanischen Eigenschaften des Bauelements werden mittels der Abfolge, der Wiederholung, der Durchmischung und der Materialwahl der einzelnen Wickelmuster gezielt, d. h. präzise, eingestellt. Dabei weist das Bauelement wenigstens zwei Arme, von welchen jeder eine Buchse aufweist, und einen Torsionsbereich auf, der mit den wenigstens zwei Armen verbunden ist.

Das Bauelement kann beispielsweise ein Vierpunktlenker für ein Fahrwerk eines Fahrzeugs sein. Alternativ kann das Bauelement ein Dreipunktlenker oder ein Zweipunktlenker für ein Fahrwerk eines Fahrzeugs sein. Wiederum alternativ dazu kann das Bauelement ein Fünfpunktlenker für ein Fahrwerk eines Fahrzeugs sein. Wiederum alternativ dazu kann das Bauelement ein Stabilisator oder ein Querlenker für ein Fahrwerk eines Fahrzeugs sein. Wiederum alternativ dazu kann das Bauelement jedes mittels eines 3D-Wickelverfahrens hergestellte Bauelement sein, das Kräfte ausschließlich über die Wicklungen des Bauelements und nicht über einen Kern aufnimmt. Das Fahrzeug kann beispielsweise ein PKW oder NKW sein.

Das Bauelement weist wenigstens zwei Arme auf, die mit einem Torsionsbereich verbunden sind. Selbstverständlich kann das Bauelement auch drei oder vier Arme aufweisen. Dies hängt von dem Einsatzzweck des Bauelements ab. Jeder Arm weist eine Buchse auf. Diese ist am distalen Ende des jeweiligen Arms angeordnet. Die wenigstens zwei Arme sind z. B. dazu vorgesehen, die Fahrzeugachse bzw. den Radträger mit einem Rahmen und/oder einer Karosserie des Fahrzeugs zu koppeln. Dazu können beispielsweise zwei Arme gelenkig mit der Fahrzeugachse bzw. dem Radträger verbunden sein, während die zwei anderen Arme gelenkig mit der Karosserie oder dem Rahmen des Fahrzeugs verbunden sind. Gelenkig bezeichnet hier eine Verdrehbarkeit um mindestens eine geometrische Achse. Die gelenkige Anbindung erfolgt dabei mittels der Buchsen, die ein Gelenk aufnehmen können.

Da das Bauelement die wenigstens zwei Arme und den Torsionsbereich aufweist, weist der Kern ebenfalls die wenigstens zwei Arme und den Torsionsbereich auf. Jede Buchse ist mit dem Kern verbunden. Der Kern ist im Wesentlichen dazu vorgesehen, die Form des Bauelements auszubilden. Vorzugsweise ist der Kern nicht zur Aufnahme von Lasten vorgesehen sondern ausschließlich zur Ablage bzw. Umwicklung mit dem Faden. Mit anderen Worten werden die Lasten und Kräfte, die in das Bauelement, z. B. durch eine Fahrzeugachse oder einen Radträger eingeleitet werden, lediglich von der aus dem Faden gebildeten Außenschale des Bauelements (Laminat) aufgenommen. Daher ist der Faden zumindest kraftschlüssig mit den jeweiligen Buchsen verbunden. Zudem kann der Faden auch formschlüssig mit den jeweiligen Buchsen verbunden sein. Alternativ dazu kann der Kern eine tragende Funktion haben. In diesem Fall ist der Kern zusätzlich schubfest an das Laminat angebunden. Der Faden ist in diesem Fall kraftschlüssig und ggf. form schlüssig mit den jeweiligen Buchsen verbunden.

Jeder Arm ist mit dem Torsionsbereich verbunden. Als Torsionsbereich wird derjenige Bereich des Bauelements bezeichnet, der maßgeblich an der Aufnahme von Tosionen beteiligt ist, wenn das Bauelement in einem Fahrzeug verwendet wird. Der Torsionsbereich dient dazu, die wenigstens zwei Arme gegenüber einer Verschwenkung zu stabilisieren. Die Arme und der Torsionsbereich sind derart angeordnet, dass eine Verschwenkung des jeweiligen Arms, das heißt eine Verdrehung des jeweiligen Arms um eine Torsionsachse, mit einer Torsion des Torsionsbereichs einhergeht. Zu der Torsion kommt es infolge eines Torsionsmoments, welches der jeweilige Arm bei der Verschwenkung auf den Torsionsbereich ausübt.

Unter einem Faden wird eine Verstärkungsfaser (Filament), ein Faserbündel (Multifilament, Roving) oder ein textil-verarbeitetes Multifilament verstanden. Der Faden oder die Fadengruppe besteht vorzugsweise aus einer Vielzahl von Endlosfasern, die durch ein Harz getränkt sind. Unter einer Fadengruppe sind mehrere Fäden zu verstehen, die zu einem Bündel zusammengefasst sind. Dieses Bündel stellt wiederum einen Faden dar. Der Faden ist mit einem Harz vorimprägniert, insbesondere kann ein sogenanntes TowPreg-Halbzeug oder PrePreg-Faden verwendet werden. Bei dem Nasswickelverfahren, wird der Faden unmittelbar vor dem Wickeln in Harz getränkt und um den Kern gewickelt. Eine maximale Ablegegeschwindigkeit des Fadens auf dem Kern von ca. 0,5 m/s bis 1 m/s ist aufgrund der Harzverluste, durch beispielsweise Fliehkräfte während des Wickelns, möglich. Demgegenüber ist die Ablegegeschwindigkeit durch die Verwendung der vorimprägnierten Fäden erheblich gesteigert, da das Harz vorgehärtet oder teilausgehärtet ist und somit Fliehkräfte keinen Einfluss haben. Der Faden ist aus Faserkunststoffverbundmaterial (FKV) ausgeformt. Vorzugsweise ist der Faden aus einem carbonfaserverstärkten Kunststoff (CFK), einem glasfaserverstärkten Kunststoff (GFK), einem aramidfaserverstärkten Kunststoff (AFK) oder einem anderen geeigneten Faserkunststoffverbundmaterial ausgeformt.

Der Faden kann für jeden Wickelvorgang gespannt, das heißt mit einer Kraft beaufschlagt sein, die eine Spannung des Fadens bewirkt. Infolgedessen ist der Faden kraftschlüssig mit dem jeweiligen Arm und dem Torsionsbereich verbunden. Der Faden verläuft vorzugsweise derart, dass eine Verschwenkung des jeweiligen Arms durch den Kraftschluss des Fadens mit dem Arm eine auf den Faden wirkende Kraft induziert, die wiederum über den Kraftschluss zwischen dem Faden und dem Torsionsbereich auf den Torsionsbereich übertragen wird. Die induzierte Kraft bewirkt dabei eine Vergrößerung der Spannung des Fadens.

Beispielsweise kann genau ein Faden mehrmals um den Kern und die jeweilige Buchse gewickelt sein. Beispielsweise wird der Faden automatisiert von einer Wickelachse abgewickelt und vorzugsweise mittels eines Roboters systematisch auf den Kern aufgewickelt, um das Bauelement auszubilden. Das Wickeln kann alternativ dazu mittels einer 5-Achs-Wickelmaschine erfolgen. Ferner ist es aber auch denkbar, dass zwei oder mehrere Roboter gleichzeitig den Kern mit einem jeweiligen Faden umwickeln, um das Bauelement auszubilden. Das Wickelverfahren findet dreidimensional statt. Bei Verwendung von mehreren Parallelfäden anstatt eines Einzelfadens wird die Herstellzeit reduziert. Aufgrund der Klebrigkeit des vorimprägnierten Fadens und der 3D-Rotation des Fadens und des Bauelements mittels eines oder mehrerer Roboter oder Drehgestelle können gekrümmte Wickelbahnen außerhalb der geodätischen Linien des Bauelements erzeugt werden.

Vorzugsweise ist der Kern aus einem Schaummaterial ausgebildet. Insbesondere ist der Kern aus einem festen, leichten, permanenten Schaummaterial ausgebildet. Vorzugsweise ist das Schaummaterial aus einem Polymer, beispielsweise aus Polyurethan, Polypropylen oder Polystyrol ausgebildet. Ferner kann der Kern auch als Inliner-Kern, verlorener Kern oder Blaskern ausgebildet sein. Wesentlich ist insbesondere die Fähigkeit des Kerns mit dem Faden umwickelt zu werden, und somit als Formgeber zu dienen.

Bevorzugt sind die Buchsen aus einem metallischen Werkstoff ausgebildet. Insbesondere kann jede Buchse aus einer Stahllegierung oder einer Leichtmetalllegierung, insbesondere einer Aluminium- oder Magnesiumlegierung ausgebildet sein. Ferner ist jede Buchse zumindest mit dem Kern verklebt. Der Kern nimmt die Buchse während des Wickelvorganges derart auf, dass ihre Lage gesichert wird. Zusätzlich dazu können die Buchsen mit dem Kernmaterial umspritzt werden, so dass ein Formschluss entsteht.

Der Faden oder die Parallelfäden werden in einer Abfolge von Wickelmustern auf dem Kern abgelegt um die äußere Form des Bauelements herzustellen. Die Wickelmuster werden miteinander kombiniert, um mechanische Eigenschaften des fertiggestellten Bauelements gezielt einzustellen, d. h. herzustellen. Diese mechanischen Eigenschaften richten sich nach der Art und dem Einsatzzweck des Bauelements. Wenn das Bauelement in einem NKW verwendet wird, sind andere mechanische Eigenschaften von Bedeutung als bei der Verwendung in einem PKW. Als mechanische Eigenschaften können eine Torsionssteifigkeit zur Wankstabilisierung, eine hohe Seitensteifigkeit zur Führung einer Fahrzeugachse, eine Längsnachgiebigkeit bezüglich besserem Komfortverhalten und/oder eine Kinematik oder Elastokinematik über einen Federweg eingestellt werden. Beispielsweise ist die Torsionssteifigkeit zur Wankstabilisierung für einen PKW geringer zu wählen als für einen LKW.

Um diese mechanischen Eigenschaften gezielt einstellen zu können, werden diejenigen Wickelmuster, die die benötigen mechanischen Eigenschaften beeinflussen, in einer vorbestimmten Reihenfolge, in einer vorbestimmten Anzahl und in einer vorbestimmten Durchmischung gewählt. Der Faden wird somit in Form der jeweiligen Wickelmuster auf dem Kern abgelegt. Das heißt, dass jedem Wickelmuster die Beeinflussung wenigstens einer mechanischen Eigenschaft des gesamten Bauelements zugeordnet ist. Ein Wickelmuster kann bei der Herstellung des Bauelements beispielsweise einmalig verwendet werden, wodurch die mechanischen Eigenschaften, die diesem Wickelmuster zugeordnet sind, weniger stark beeinflusst werden als bei mehrmaligem wiederholen des Wickelmusters. Beispielsweise kann eine hohe Torsionssteifigkeit des gesamten Bauelements erreicht werden, indem der Faden wiederholt in einem Wickelmuster abgelegt wird, dass eine Schubsteifigkeit des Torsionsbereichs beeinflusst. Weiterhin können mehrere Wickelmuster stark oder gering durchmischt werden. Das heißt, der Faden kann in Wickelmusterpaketen oder alternierenden Wickelmustern abgelegt werden. Dabei ist eine intensive Durchmischung der Wickelmuster vorzuziehen, so dass eine kontinuierliche Lastübergabe innerhalb des Laminats erfolgen kann.

Weiterhin können zwei oder mehr unterschiedliche Wickelmuster aufeinander folgen, um eine Lastübergabe eines Teilabschnitts des Bauelements auf einen anderen Teilabschnitt des Bauelements sicherzustellen. Beispielsweise kann mittels eines Wickelmusters einer der wenigstens zwei Arme mit dem Torsionsbereich verbunden werden, und anschließend ein anderer der wenigstens zwei Arme mittels eines weiteren Wickelmusters mit dem Torsionsbereich verbunden werden. Somit können beide Arme Lasten in den Torsionsbereich übertragen.

Des Weiteren werden durch geschickte Kombination der Wickelmuster Materialanhäufungen und lokale Aufdickungen vermieden. Es wird angestrebt, dass eine möglichst ebene und gleichmäßige Oberfläche des Bauelements entsteht. Es sollen Hohlräume und/oder Harzwickel im Laminat vermieden werden. Dies ist z. B. durch eine Abwechslung der Wickelmuster ermöglicht, so dass es während des Wickelns zu einer gleichmäßigen Dickenentwicklung kommt. Alternativ können auch gezielt Verdickungen des Laminats erzeugt werden, z. B. ein äußeres Fachwerk, wenn die entsprechenden Struktureigenschaften gewünscht sind. Zudem können geschlossene oder geöffnete Laminate, die fachwerkartig oder vollflächig ausgebildet sind, durch geschickte Kombination der Wickelmuster realisiert werden. Die genaue Abfolge, Wiederholung und Durchmischung der Wickelmuster wird vorzugsweise mittels einer numerischen Simulation bestimmt.

Um Steifigkeiten und Festigkeiten des gesamten Bauelements gezielt beeinflussen zu können, ist zu beachten, dass diejenigen Wickelmuster, die sich weiter außen im Laminat befinden, einen größeren Einfluss auf diese Steifigkeiten und Festigkeiten haben, weil sie höhere Flächenträgheitsmomente besitzen, als die weiter innen liegenden Wickelmuster. Dies kann zur Feinjustierung der mechanischen Eigenschaften genutzt werden. Die Grobjustierung kann durch die Anzahl der Wiederholungen der Wickelmuster beeinflusst werden. Weiter außen liegende Wickelmuster sind diejenigen Wickelmuster, die bei der Herstellung des Bauelements zeitlich später gewickelt werden. Alternativ können auch unterschiedliche Wickelmuster betont oder abgeschwächt werden durch eine gezielte Wahl von Materialen z. B. kann ein erstes Wickelmuster mittels eines CFK-Fadens erzeugt werden und ein zweites Wickelmuster mittels eines GFK-Fadens.

Vorteilhaft an dem hier vorgestellten Verfahren ist, dass dieses ein robustes, flexibles und schnelles Herstellungsverfahren ist. Der Faden wird faseroptimiert abgelegt. Es kann eine hohe Wickelgeschwindigkeit genutzt werden, wodurch die Produktion der Bauelemente für eine Serienfertigung beschleunigt wird. Das vorgestellte Herstellungsverfahren ist zudem modular. Das heißt, dasselbe Verfahren kann auf einfache Art und Weise auf unterschiedlich dimensionierte Bauelemente für verschiedene Einsatzzwecke angepasst werden. Somit können also Varianten einer Grundstruktur für diese verschiedenen Einsatzzwecke mit geringem Aufwand hergestellt werden. Weiterhin weist das somit entstandene Bauelement eine geringere Masse auf als vergleichbare Bauelemente aus metallischen Materialien. Das Bauelement ist daher ein Leichtbau-Bauelement.

Nach einer Ausführungsform wird bei einem ersten Wickelmuster der Faden im Wesentlichen parallel zu einer Längsachse eines der Arme geführt. Der Faden wird radial um diesen Arm und um den Torsionsbereich des Kerns gewickelt, so dass eine I-Form entsteht. Es entstehen somit unidirektionale Faserlagen. Dadurch werden eine Festigkeit und eine Biegesteifigkeit dieses Arms hergestellt. Jeder Arm des Bauelements kann nach diesem ersten Wickelmuster mit dem Faden umwickelt werden.

Im Wesentlichen parallel heißt hierbei, dass der Faden in einem Winkel von ca. 0° zu der Längsachse des Arms geführt wird. Dies schließt Abweichungen von ca. +/-5° ein. Die Längsachse eines Arms ist dabei diejenige geometrische Achse, die sich von seinem distalen Ende zu seinem proximalen Ende erstreckt. Beispielsweise kann das erste Wickelmuster sowohl bei einer Achsstrebe als auch bei einem Dreipunktlenker sowie bei einem Vierpunktlenker eingesetzt werden.

Nach einer weiteren Ausführungsform wird bei einem zweiten Wickelmuster der Faden im Wesentlichen parallel zu einer Längsachse eines ersten der Arme, im Wesentlichen parallel zu einer Längsachse eines zweiten der Arme und in einer Bahn schräg zu einer Längsachse des Torsionsbereichs geführt. Diese beiden Arme liegen sich an der Längsachse des Torsionsbereichs gegenüber. Die Längsachse des Torsionsbereichs ist senkrecht zu einer Querachse des Torsionsbereichs. Ist das Bauelement beispielsweise als ein Vierpunktlenker ausgeformt, ist die Längsachse des Torsionsbereichs quer zu den Längsachsen der Arme ausgerichtet. Zudem können sich die beiden Arme an der Querachse des Torsionsbereichs gegenüberliegen. In anderen Worten liegen sich die beiden Arme an der Längsachse und an der Querachse schräg gegenüber.

Der Faden wird radial um diese beiden Arme und in einer Bahn oder in einem Strang um den Torsionsbereich des Kerns gewickelt, so dass eine Z-Form entsteht. Dabei ist die Ausrichtung des Fadens, der den Torsionsbereich in einer Bahn umwickelt z. B. ca. +/-45° zu der Längsachse des Torsionsbereichs. Es entstehen durch das Wickeln unidirektionale Faserlagen im Bereich der Arme und ein Cross-Ply-Laminat im Bereich des Torsionsbereichs. Bei einem Cross-Ply-Laminat sind die Faserlagen in einem Winkel zu einer Achse angeordnet, hier also in einem Winkel von ca. +/-45° zu der Längsachse des Torsionsbereichs.

Mittels des zweiten Wickelmusters werden Lastpfade zwischen diesen beiden Armen dargestellt und eine Verbindung zwischen diesen Armen und dem Torsionsbereich wird hergestellt. Dadurch ist eine Kraft von den Armen in den Torsionsbereich übertragbar. Das heißt, wenn das Bauelement in einem Fahrzeug verwendet wird, kann bei einem Lastfall die Kraft von den Armen in den Torsionsbereich übertragen werden. Beispielsweise kann das zweite Wickelmuster sowohl bei einem Dreipunktlenker als auch bei einem Vierpunktlenker eingesetzt werden.

Nach einer weiteren Ausführungsform wird bei einem dritten Wickelmuster der Faden an den Übergangsbereichen des Torsionsbereichs zu den Armen schräg zu der Längsachse des Torsionsbereichs geführt. Der Faden wird radial um jeden dieser Übergangbereiche des Kerns gewickelt, so dass z. B. eine V-Form oder eine Rauten-Form entsteht. Der Übergangsbereich zwischen dem Torsionsbereich und einem Arm ist derjenige Bereich, an dem der Arm mit seinem proximalen Ende mit dem Torsionsbereich verbunden ist. Die Ausrichtung des Fadens an diesen Übergangsbereichen kann beispielsweise ca. +/-45° zu der Längsachse des Torsionsbereichs betragen.

Mittels des dritten Wickelmusters wird eine Schubsteifigkeit des Torsionsbereichs erhöht. Diese Erhöhung tritt vor allem an den umwickelten Übergangsbereichen auf. Das so entstehende Laminat ist wesentlich an der Schubleitung des Torsionsbereichs beteiligt. Weiterhin kann mittels des dritten Wickelmusters eine Last von den Armen an den Torsionsbereich weitergegeben werden, wenn das Bauelement in einem Fahrzeug verwendet wird und ein Lastfall auftritt. Beispielsweise kann das dritte Wickelmuster sowohl bei einem Dreipunktlenker als auch bei einem Vierpunktlenker eingesetzt werden.

Nach einer weiteren Ausführungsform wird bei einem vierten Wickelmuster der Faden im Wesentlichen parallel zu einer Längsachse eines ersten der Arme, im Wesentlichen parallel zu einer Längsachse eines dritten der Arme und in zwei Bahnen schräg zu der Längsachse des Torsionsbereichs geführt. Diese beiden Arme liegen sich an einer Querachse des Torsionsbereichs gegenüber. Der Faden wird radial um diese beiden Arme und in zwei Bahnen oder in zwei Strängen um den Torsionsbereich des Kerns gewickelt, so dass eine W-Form entsteht. Dabei ist die Ausrichtung des Fadens, der den Torsionsbereich in zwei Bahnen umwickelt jeweils z. B. ca. +/-60° zu der Längsachse des Torsionsbereichs. Es entstehen durch das Wickeln unidirektionale Faserlagen im Bereich der Arme und ein Cross-Ply-Laminat im Bereich des Torsionsbereichs mit einem Winkel von ca. +/- 60° zu der Längsachse des Torsionsbereichs.

Mittels des vierten Wickelmusters werden Lastpfade zwischen diesen beiden Armen dargestellt. Zudem wird eine Verbindung zwischen diesen Armen und dem Torsionsbereich hergestellt. Dadurch ist eine Kraft in den Torsionsbereich übertragbar. Das heißt, wenn das Bauelement in einem Fahrzeug verwendet wird, kann bei einem Lastfall die Kraft von den Armen in den Torsionsbereich übertragen werden. Beispielsweise kann das vierte Wickelmuster sowohl bei einem Dreipunktlenker als auch bei einem Vierpunktlenker eingesetzt werden.

Nach einer weiteren Ausführungsform wird bei einem fünften Wickelmuster der Faden an zwei Armen, die sich an der Querachse des Torsionsbereichs gegenüberliegen, als wenigstens eine Kreuzwicklung pro Arm und in zwei Bahnen schräg zu der Längsachse des Torsionsbereichs geführt. Die beiden Bahnen, die schräg zu der Längsachse des Torsionsbereichs sind, dienen der Rückverankerung des Fadens an dem Torsionsbereich.

Die Kreuzwicklungen sind an den Seiten der Arme angeordnet. Diese Seiten sind derart ausgerichtet, dass diese in einer geometrischen Ebene liegen, die von der Querachse des Torsionsbereichs und von einer Hochachse des Torsionsbereichs aufgespannt wird, wobei die Hochachse senkrecht ist zu der Längsachse des Torsionsbereichs. Die Kreuzwicklung kann an jedem Arm entweder nahe dem distalen Ende oder nahe dem proximalen Ende angeordnet sein. Das heißt, die Anordnung der Kreuzwicklung ist bei jedem Arm gleich. Die Kreuzwicklungen sind in diesem Fall vorzugsweise an einer äußeren Seite jedes Arms angeordnet. Eine äußere Seite ist diejenige Seite eines Arms, die von den anderen Armen abgewandt ist.

Alternativ dazu kann die Kreuzwicklung eines ersten Arms nahe dessen distalem Ende und die Kreuzwicklung eines dritten Arms nahe dessen proximalem Ende angeordnet sein. Wiederum alternativ dazu kann eine erste Kreuzwicklung des ersten Arms nahe an dessen proximalem Ende und eine zweite Kreuzwicklung des ersten Arms nahe an dessen distalem Ende angeordnet sein. Das gleiche kann für den dritten Arm gelten. Jeder Arm weist dann zwei Kreuzwicklungen auf. Dabei sind die erste Kreuzwicklung eines Arms vorzugsweise an dessen äußerer Seite und die zweite Kreuzwicklung desselben Arms vorzugsweise an dessen innerer Seite angeordnet. Selbstverständlich kann diese Anordnung auch umgekehrt sein.

Der Faden wird als eine, zwei oder mehrere Kreuzwicklungen um die beiden Arme und radial in zwei Bahnen oder in zwei Strängen um den Torsionsbereich des Kerns gewickelt, so dass eine X-Form an den Seiten der jeweiligen Arme entsteht.

Mittels des fünften Wickelmusters wird ein Schubverband hergestellt. Durch diesen können Querkräfte an den Armen des Bauelements aufgenommen werden, wenn das Bauelement in einem Fahrzeug verwendet wird und ein Lastfall eintritt. Beispielsweise kann das vierte Wickelmuster sowohl bei einem Dreipunktlenker als auch bei einem Vierpunktlenker eingesetzt werden.

Nach einer weiteren Ausführungsform wird bei einem sechsten Wickelmuster der Faden als Ringwicklungen und Kreuzwicklungen um jede Buchse geführt. Diese Buchsen werden somit an dem Kern verankert. Mittels der Ring- und Kreuzwicklungen entstehen ein Kraftschluss und ein Formschluss zwischen den Buchsen und dem Faden sowie zwischen den Buchsen und dem Laminat des gesamten Bauelements.

Mittels des sechsten Wickelmusters können Lasten, z. B. Quer- und Seitenkräfte, in das Laminat des Bauelements eingeleitet werden, wenn das Bauelement in einem Fahrzeug verwendet wird und ein Lastfall auftritt. Beispielsweise kann das sechste Wickelmuster sowohl bei einer Achsstrebe als auch bei einem Dreipunktlenker sowie bei einem Vierpunktlenker eingesetzt werden.

Nach einer weiteren Ausführungsform wird bei einem siebten Wickelmuster der Faden als Umfangswicklung um wenigstens einen der Arme und/oder um den Torsionsbereich geführt.

Der Faden wird radial um die Längsachse des wenigstens einen Arms des Kerns geführt. Dabei ist die Ausrichtung jedoch zu unterscheiden von dem ersten Wickelmuster. Der Faden ist bei dem siebten Wickelmuster im Wesentlichen senkrecht zu dem Faden ausgerichtet, der nach dem ersten Wickelmuster gewickelt wurde. Dadurch ist der Faden zudem im Wesentlichen senkrecht zu der Längsachse des jeweiligen Arms ausgerichtet. Das heißt, der Faden ist in O-Form um den wenigstens einen Arm gewickelt. Selbstverständlich kann mehr als ein Arm mit einer Umfangwicklung umwickelt werden.

Zusätzlich oder alternativ dazu wird der Faden radial um die Längsachse des Torsionsbereichs des Kerns geführt. Dabei ist der Faden im Wesentlichen senkrecht zu der Längsachse des Torsionsbereichs ausgerichtet. Das heißt, der Faden ist in O-Form um den Torsionsbereich gewickelt. Im Wesentlichen senkrecht heißt hierbei, dass der Faden ca. 90° zu der Längsachse des Arms oder des Torsionsbereichs ausgerichtet ist. Dies schließt Abweichungen von ca. +/-5° ein.

Mittels des siebten Wickelmusters kann das Laminat des Bauelements an wenigstens einem Arm oder an allen Armen sowie an dem Torsionsbereich kompaktiert werden. Zudem entsteht somit eine geschlossene Oberfläche des Bauelements. Beispielsweise kann das siebte Wickelmuster sowohl bei einer Achsstrebe als auch bei einem Dreipunktlenker sowie bei einem Vierpunktlenker eingesetzt werden.

Nach einer weiteren Ausführungsform wird bei einem achten Wickelmuster der Faden an dem Torsionsbereich in vier Bahnen schräg zu der Längsachse des Torsionsbereichs und schräg zu der Querachse des Torsionsbereichs geführt. Der Faden wird radial um den Torsionsbereich des Kerns geführt, wobei dies in vier Bahnen erfolgt. Der Faden weist zu der Längsachse des Torsionsbereichs vorzugsweise eine Ausrichtung von ca. +/-35° auf. Es entsteht eine Parallelogramm-Form, wobei zwei Bahnen stets die gleiche Ausrichtung aufweisen. Diese beiden Bahnen sind vorzugsweise jeweils in dem Übergangsbereich eines Arms zum Torsionsbereich angeordnet, wobei sich die beiden Arme an der Längsachse des Torsionsbereichs und an der Querachse des Torsionsbereichs schräg gegenüberliegen.

Mittels des achten Wickelmusters wird eine Schubsteifigkeit des Torsionsbereichs erhöht. Das so entstehende Laminat ist wesentlich an der Schubleitung des Torsionsbereichs beteiligt. Weiterhin kann mittels des achten Wickelmusters eine Last von den Armen an den Torsionsbereich weitergegeben werden, wenn das Bauelement in einem Fahrzeug verwendet wird und ein Lastfall auftritt. Beispielsweise kann das achte Wickelmuster sowohl bei einem Dreipunktlenker als auch bei einem Vierpunktlenker eingesetzt werden.

Nach einer weiteren Ausführungsform wird bei einem neunten Wickelmuster der Faden an dem Torsionsbereich im Wesentlichen parallel zu den Längsachsen von wenigstens zwei der Arme geführt. Dabei wird der Faden radial um den Torsionsbereich des Kerns geführt. Eine Bahn des Fadens ist z. B. im Wesentlichen parallel zu der Längsachse des ersten Arms ausgerichtet und eine weitere Bahn des Fadens ist vorzugsweise im Wesentlichen parallel zu der Längsachse des dritten Arms ausgerichtet. Diese beiden Arme liegen sich an der Querachse des Torsionsbereichs gegenüber. Zudem weist der Faden z. B. eine Ausrichtung von ca. +/-60° zu der Längsachse des Torsionsbereichs auf.

Mittels des neunten Wickelmusters wird eine Schubsteifigkeit des Torsionsbereichs erhöht. Das so entstehende Laminat ist wesentlich an der Schubleitung des Torsionsbereichs beteiligt. Zudem können große Lasten von den Armen in den Torsionsbereich übertragen werden, wenn das Bauelement in einem Fahrzeug verwendet wird und ein Lastfall auftritt. Dies ist besonders von Vorteil wenn das neunte Wickelmuster mit z. B. dem ersten, dem zweiten oder dem vierten Wickelmuster kombiniert wird. Dadurch wird die maximale Lastaufnahme des Laminats erhöht. Beispielsweise kann das neunte Wickelmuster sowohl bei einer Achsstrebe als auch bei einem Dreipunktlenker sowie bei einem Vierpunktlenker eingesetzt werden.

Nach einer weiteren Ausführungsform wird bei einem zehnten Wickelmuster der Faden an dem Torsionsbereich im Wesentlichen parallel zu der Längsachse eines der Arme geführt. Dabei wird der Faden radial um den Torsionsbereich des Kerns geführt. Die Bahnen des Fadens sind beispielsweise im Wesentlichen parallel zu der Längsachse des ersten Arms ausgerichtet. Zudem weist der Faden z. B. eine Ausrichtung von ca. +/-45° zu der Längsachse des Torsionsbereichs auf.

Mittels des zehnten Wickelmusters wird eine Schubsteifigkeit des Torsionsbereichs erhöht. Das so entstehende Laminat ist wesentlich an der Schubleitung des Torsionsbereichs beteiligt. Beispielsweise kann das zehnte Wickelmuster sowohl bei einer Achsstrebe als auch bei einem Dreipunktlenker sowie bei einem Vierpunktlenker eingesetzt werden.

Nach einer weiteren Ausführungsform ist der Kern an einem Roboterarm aufgenommen, wobei der Kern während des Umwickelns mit dem Faden von dem Roboterarm geführt wird. Der Roboterarm ist dabei dreidimensional beweglich. Beispielsweise wird der Faden von einer Wickelachse abgewickelt und um den Kern aufgewickelt. Bevorzugt ist der Faden als TowPreg ausgebildet.

Nach einer weiteren Ausführungsform ist der Kern an einer geometrischen Achse aufgenommen ist, wobei der Faden von einem Roboterarm geführt wird, um den Kern mit dem Faden zu umwickeln. Vorzugsweise ist die Achse drehbar gelagert. Alternativ werden eine oder mehrere Veränderungen der feststehenden Wickelachse (Umspannen) im Laufe des Wickelprozesses vorgenommen

Ein Bauelement weist wenigstens zwei Arme, von welchen jeder eine Buchse aufweist, und einen Torsionsbereich, der mit den wenigstens zwei Armen verbunden ist, auf. Zudem weist das Bauelement einen Kern auf, der mit einem Faden derart umwickelt ist, dass ein Laminat aus einem FKV entsteht. Das Bauelement ist nach dem Verfahren hergestellt, das in der vorherigen Beschreibung beschrieben wurde. Das Laminat dient der Aufnahme von Lasten, der Kern dient ausschließlich zur Ablage bzw. Umwicklung mit dem Faden.

Nach einer Ausführungsform ist das Bauelement ein Bauelement für ein Fahrwerk eines Fahrzeugs. Das Bauelement kann z. B. ein Vierpunktlenker, ein Fünfpunktlenker, ein Dreipunktlenker oder ein Zweipunktlenker sein. Diese Bauelemente können für eine Radaufhängung des Fahrzeugs verwendet werden. Das Fahrzeug kann z. B. ein PKW oder NKW sein.

Anhand der im Folgenden erläuterten Figuren werden verschiedene Ausführungsbeispiele und Details der Erfindung näher beschrieben. Es zeigen:
- Fig. 1: eine schematische Darstellung eines Bauelements nach eine Ausführungsbeispiel,
- Fig. 2: eine schematische Darstellung des Bauelements aus Fig. 1 mit sichtbaren Wickelmustern,
- Fig. 3: eine schematische Darstellung des Bauelements aus Fig. 1 mit sichtbarem ersten Wickelmuster,
- Fig. 4: eine schematische Darstellung des Bauelements aus Fig. 1 mit sichtbarem zweiten Wickelmuster,
- Fig. 5: eine schematische Darstellung des Bauelements aus Fig. 1 mit sichtbarem dritten Wickelmuster,
- Fig. 6: eine schematische Darstellung des Bauelements aus Fig. 1 mit sichtbarem vierten Wickelmuster,
- Fig. 7: eine schematische Darstellung des Bauelements aus Fig. 1 mit sichtbarem fünften Wickelmuster in einer ersten Variante,
- Fig. 8: eine schematische Darstellung des Bauelements aus Fig. 1 mit sichtbarem fünften Wickelmuster in einer zweiten Variante,
- Fig. 9: eine schematische Darstellung des Bauelements aus Fig. 1 mit sichtbarem sechsten Wickelmuster,
- Fig. 10: eine schematische Darstellung des Bauelements aus Fig. 1 mit sichtbarem siebten Wickelmuster in einer ersten Variante,
- Fig. 11: eine schematische Darstellung des Bauelements aus Fig. 1 mit sichtbarem siebten Wickelmuster in einer zweiten Variante,
- Fig. 12: eine schematische Darstellung des Bauelements aus Fig. 1 mit sichtbarem achten Wickelmuster,
- Fig. 13: eine schematische Darstellung des Bauelements aus Fig. 1 mit sichtbarem neunten Wickelmuster,
- Fig. 14: eine schematische Darstellung des Bauelements aus Fig. 1 mit sichtbarem zehnten Wickelmuster.

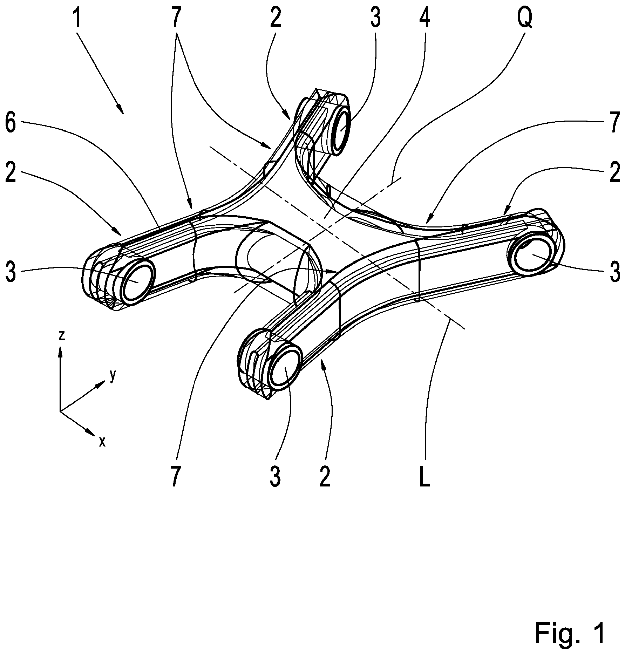

Fig. 1 zeigt eine schematische Darstellung eines Bauelements 1 nach einem Ausführungsbeispiel. Das Bauelement 1 ist als ein Vierpunktlenker für eine Radaufhängung eines Fahrzeugs ausgeformt. Das hier dargestellte Bauelement 1 ist ein Leichtbau-bauelement, das einen Schaumkern, der hier nicht zu erkennen ist, aufweist. Zudem weist das Bauelement 1 einen Faden 6 aus einem FKV auf, der um diesen Kern herumgewickelt ist und somit das Laminat des Bauelements 1 ausbildet. Weiterhin ist ein kartesisches Koordinatensystem eingezeichnet.

Das Bauelement 1 weist vier Arme 2 und einen Torsionsbereich 4 auf. Alle vier Arme 2 sind mit dem Torsionsbereich 4 verbunden. Jeder Arm 2 weist eine Buchse 3 auf, die zur Aufnahme eines Lagers oder eines Gelenks dient. Das Bauelement 1 weist zwischen jedem Arm 2 und dem Torsionsbereich 4 einen Übergangsbereich 7 auf. Dieser Übergangsbereich 7 stellt das proximale Ende jedes Arms 2 dar. Die Buchse 3 eines Arms 2 ist an dessen distalem Ende angeordnet.

Das hier dargestellte Bauelement 1 ist symmetrisch zu einer Querachse Q des Torsionsbereichs 4 ausgebildet. Weiterhin weist der Torsionsbereich 4 eine Längsachse L auf, die senkrecht zu der Querachse Q ist. Sowohl die Längsachse L als auch die Querachse Q sind geometrische Achsen.

Das Bauelement 1 ist derart ausgebildet, dass dieses Kräfte und Lasten, die über die Buchsen 3 in das Bauelement 1 eingeleitet werden, ausschließlich über das Laminat, das durch den Faden 6 ausgebildet ist, aufnimmt. Der hier nicht zu erkennende Kern ist nicht an der Lastaufnahme beteiligt. Das Laminat des Bauelements 1 ist mittels des Fadens 6 ausgebildet, der auf dem hier nicht dargestellten Kern abgelegt wird. Dieses Ablegen erfolgt in der Form von Wickelmustern, die in den folgenden Figuren näher dargestellt werden. Jedem Wickelmuster ist eine bestimmte Aufgabe zugeordnet, eine oder mehrere mechanische Eigenschaften des Bauelements 1 zu beeinflussen. Dies wird ebenfalls in den folgenden Figuren näher erläutert.

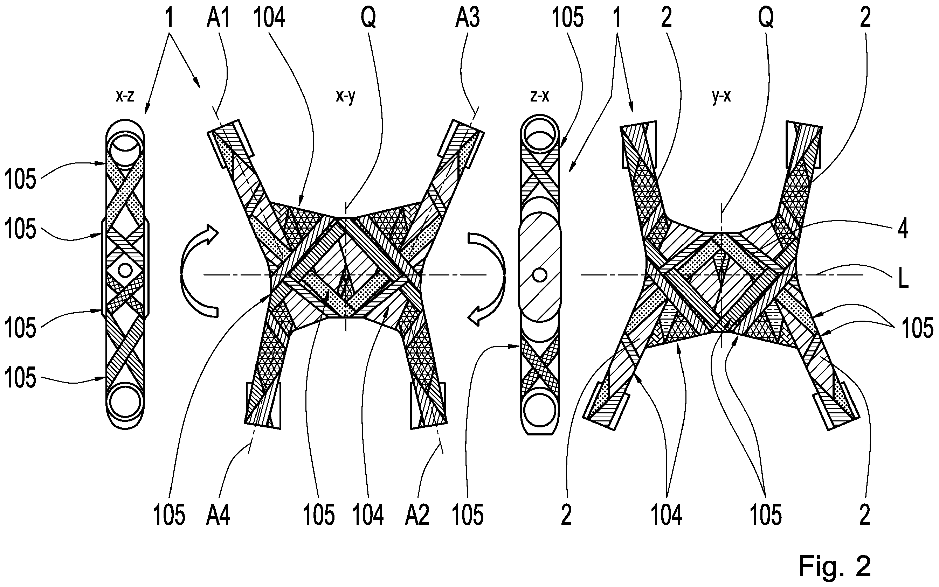

Fig. 2 zeigt eine schematische Darstellung des Bauelements 1 aus Fig. 1 mit zwei sichtbaren Wickelmustern 104, 105. Der Übersichtlichkeit halber sind nur diese zwei Wickelmuster 104, 105 in verschiedenen Varianten dargestellt. Fig. 2 zeigt das vierte Wickelmuster 104 in zwei Varianten und das fünfte Wickelmuster 105 in vier Varianten. Zudem ist das Laminat hier nicht geschlossen dargestellt, so dass der Kern 5 zu erkennen ist. Das Bauelement 1 ist in vier Ansichten dargestellt, wobei eine Draufsicht in der xy-Ebene, eine Draufsicht in der yx-Ebene, eine Seitenansicht in der xz-Ebene und eine weitere Seitenansicht in der zx-Ebene dargestellt ist. Das Umwenden des Bauteils 1 um die Längsachse L des Torsionsbereichs 4 wird mittels der Pfeile dargestellt. Es sind zudem die Längsachsen A1, A2, A3, A4 der vier Arme 2 des Bauelements 1 eingezeichnet. Zudem ist die Querachse des Torsionsbereichs 4 eingezeichnet.

Bei dem hier dargestellten vierten Wickelmuster 104 ist der Faden 6 im Wesentlichen parallel zu der Längsachse A1 des ersten Arms 2 und der Längsachse A3 des dritten Arms 2, sowie in zwei Bahnen schräg zu der Längsachse L des Torsionsbereichs 4 geführt. Zudem ist das vierte Wickelmuster 104 gespiegelt an der Längsachse L des Torsionsbereichs 4 ein zweites Mal ausgeführt. Hierbei ist der Faden 6 im Wesentlichen parallel zu einer Längsachse A2 eines zweiten Arms 2 und im Wesentlichen parallel zu einer Längsachse A4 eines vierten Arms 2 und in zwei Bahnen schräg zu der Längsachse L des Torsionsbereichs 4 geführt. Das vierte Wickelmuster 104 bildet somit mit dem Faden 6 eine W-Form ab.

Mittels des vierten Wickelmusters 104 werden Lastpfade zwischen dem ersten und dem dritten Arm 2 sowie zwischen dem zweiten und dem vierten Arm 2 hergestellt. Außerdem wird eine Verbindung zwischen dem ersten und dem dritten Arm 2 und dem Torsionsbereich 4 hergestellt. Ebenso wird eine Verbindung zwischen dem zweiten und dem vierten Arm 2 und dem Torsionsbereich 4 hergestellt. Dadurch kann eine Kraft von den Armen 2 in den Torsionsbereich 4 übertragen werden.

Das fünfte Wickelmuster 105 wird hier in Fig. 2 vier Mal verwendet. Dabei sind zwei Varianten zu unterscheiden. Diese zwei Varianten des fünften Wickelmusters 105 sind jeweils gespiegelt an der Längsachse L des Torsionsbereichs 4 abgelegt.

In einer ersten Variante des fünften Wickelmusters 105 wird an einer Seite des ersten Arms 2 und an einer Seite des dritten Arms 2 eine Kreuzwicklung nahe dem distalen Endes des jeweiligen Arms abgelegt. Zudem wird der Faden 6 in zwei Bahnen schräg zu der Längsachse L des Torsionsbereichs 4 geführt. Diese schrägen Bahnen dienen der Verankerung des Fadens 6 an dem Torsionsbereich 4. Die Kreuzwicklungen befinden sich hier an einer Außenseite des Bauelements 1, was in der xz-Ebene zu sehen ist.

In einer zweiten Variante des fünften Wickelmusters 105 sind an jedem Arm 2 jeweils zwei Kreuzwicklungen abgelegt. Dabei ist eine erste Kreuzwicklung nahe dem proximalen Ende des jeweiligen Arms 2 abgelegt und eine zweite Kreuzwicklung ist nahe dem distalen Ende des jeweiligen Arms 2 abgelegt. Dabei befindet sich eine Kreuzwicklung auf der Außenseite des jeweiligen Arms 2 und eine Kreuzwicklung befindet sich auf der Innenseite des jeweiligen Arms 2. Die Innenseite ist hierbei mit der zx-Ebene zu sehen. Der Faden 6 wird hierbei wiederum mit zwei Bahnen an dem Torsionsbereich 4 rückverankert. Bei dieser zweiten Variante des Wickelmusters 105 weist der erste Arm 2 und der dritte Arm 2 jeweils zwei Kreuzwicklungen auf.

Da das fünfte Wickelmuster 105 an der Längsachse L gespiegelt nochmals abgelegt ist, weisen somit auch der zweite Arm 2 und der vierte Arm 2 jeweils zwei Kreuzwicklungen nach der zweiten Variante und jeweils eine Kreuzwicklung nach der ersten Variante des fünften Wickelmusters 105 auf. Mittels des fünften Wickelmusters wird ein Schubverband hergestellt. Durch diesen können die Querkräfte an den Armen 2 des Bauelements 1 aufgenommen werden.

In den folgenden Figuren werden zur besseren Übersichtlichkeit die einzelnen Wickelmuster 101, 102, 103, 104, 105, 106, 107, 108, 109, 110 genauer dargestellt.

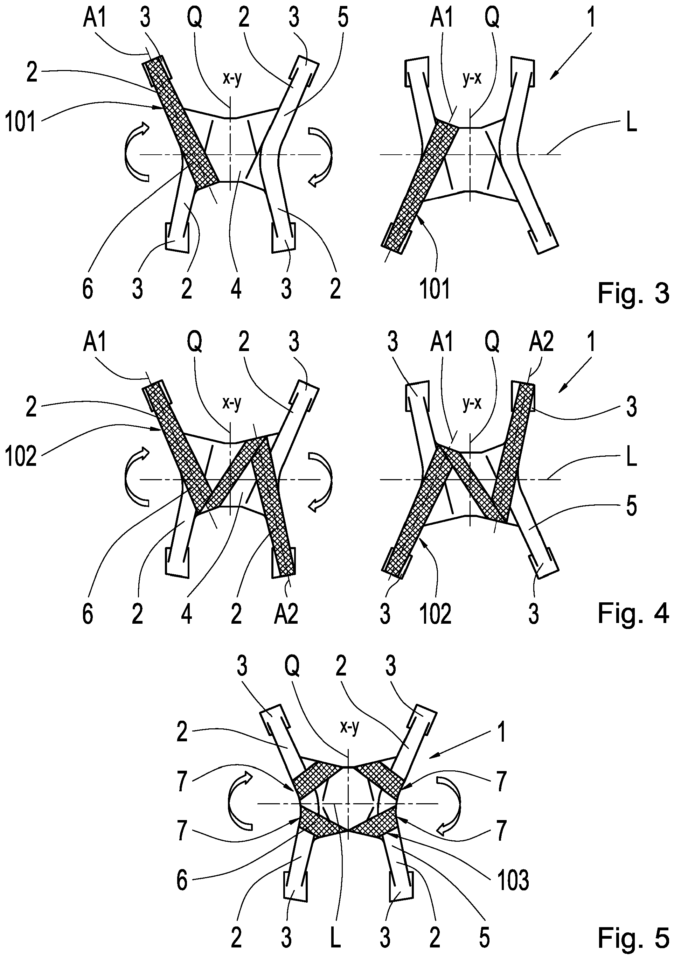

Fig. 3 zeigt eine schematische Darstellung des Bauelements 1 aus Fig. 1 mit sichtbarem ersten Wickelmuster 101. Dargestellt ist das Bauelement 1 in einer xy- und einer yx-Ebene. Der Faden 6 ist hier im Wesentlichen parallel zu der Längsachse A1 des ersten Arms 2 geführt. Selbstverständlich kann der Faden 6 auch im Wesentlichen parallel zu der Längsachse A2 des zweiten Arms 2 oder zu der Längsachse A3 des dritten Arms 2 oder zu der Längsachse A4 des vierten Arms 2 geführt werden. Der Faden 6 ist somit in einer I-Form abgelegt. Der Faden 6 wird radial um den ersten Arm 2 des Kerns 5 und um den Torsionsbereich 4 des Kerns 5 gewickelt. Die Faserlagen des Fadens 6 sind unidirektional. Das Wickelmuster 101 dient dazu eine Festigkeit und eine Biegesteifigkeit des jeweiligen Arms 2, also hier des ersten Arms 2, herzustellen und zu verbessern.

Fig. 4 zeigt eine schematische Darstellung des Bauelements 1 aus Fig. 1 mit sichtbarem zweiten Wickelmuster 102. Bei diesem zweiten Wickelmuster 102 ist der Faden 6 im Wesentlichen parallel zu der Längsachse A1 des ersten Arms 2, im Wesentlichen parallel zu der Längsachse A2 des zweiten Arms 2 und in einer Bahn schräg zu der Längsachse L des Torsionsbereichs 4 geführt. Die Bahn ist zudem schräg zu der Querachse Q des Torsionsbereichs 4. Die Ausrichtung dieser Bahn beträgt ca. 45° zu der Längsachse L des Torsionsbereichs 4. Dargestellt sind eine xy- und eine yx-Ebene.

Der Faden 6 ist radial um den ersten Arm 2 und den zweiten Arm 2 sowie radial um den Torsionsbereich 4 geführt. Dadurch werden die beiden Arme 2, die sich an der Längsachse L und an der Querachse Q des Torsionsbereichs 4 schräg gegenüberliegen, miteinander verbunden. Zudem werden diese Arme 2 mit dem Torsionsbereich 4 verbunden. Der Faden 6 ist in einer Z-Form auf dem Kern 5 abgelegt. Dadurch kann eine Kraft von den Armen 2 in den Torsionsbereich 4 übertragen werden. Es sind also Lastpfade zwischen den beiden Armen 2 entstanden.

Selbstverständlich kann dieses zweite Wickelmuster 102 auch gespiegelt angewendet werden. Dabei kann der dritte Arm 2 mit dem vierten Arm 2 verbunden werden. Zudem werden der dritte Arm 2 und der vierte Arm 2 mit dem Torsionsbereich 4 verbunden.

Fig. 5 zeigt eine schematische Darstellung des Bauelements 1 aus Fig. 1 mit sichtbarem dritten Wickelmuster 103. Der Faden 6 wird an den Übergangsbereichen 7 zwischen dem Torsionsbereich 4 und den vier Armen 2 schräg zu der Längsachse L des Torsionsbereichs 4 geführt. Der Faden 6 ist radial um jeden dieser Übergangsbereiche 7 des Kerns 5 gewickelt. Der Faden 6 ist somit in Form einer Raute auf dem Kern 5 abgelegt. Gezeigt ist dies in einer xy-Ebene. Der Faden 6 ist zu der Längsachse L des Torsionsbereichs 4 in ungefähr einem 45° Winkel für jeden Übergangsbereich 7 ausgerichtet. Mittels des dritten Wickelmusters 103 wird eine Schubsteifigkeit des Torsionsbereichs 4 erhöht. Diese tritt vor allem an den umwickelten Übergangsbereichen 7 zutage. Zudem kann eine Last von den Armen 2 an den Torsionsbereich 4 weitergegeben werden.

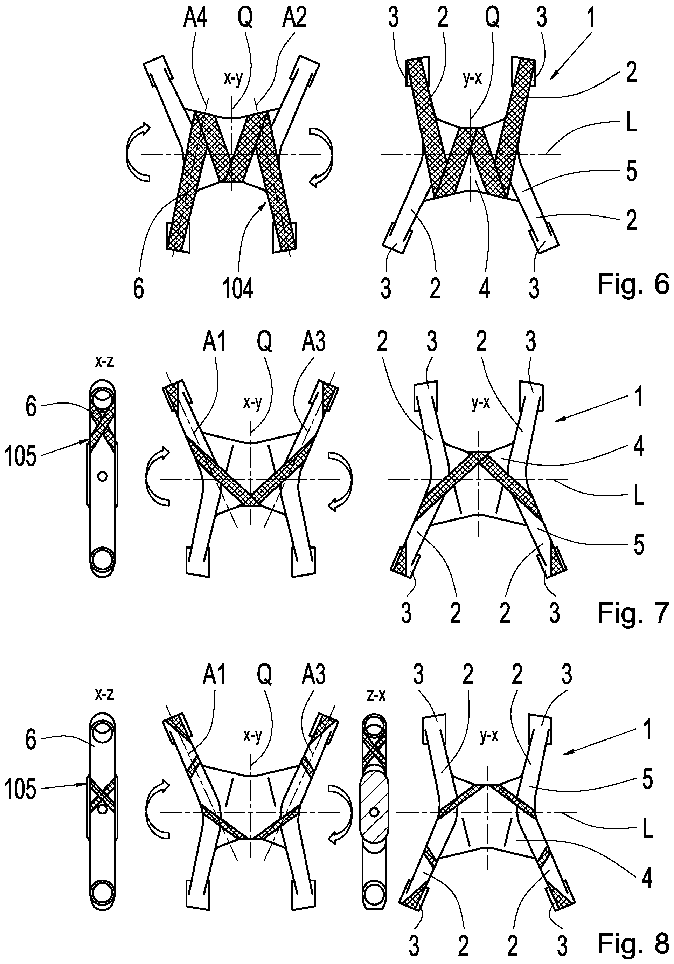

Fig. 6 zeigt eine schematische Darstellung des Bauelements 1 aus Fig. 1 mit sichtbarem vierten Wickelmuster 104. Bei diesem vierten Wickelmuster 104 ist der Faden 6 im Wesentlichen parallel zu der Längsachse A4 des zweiten Arm 2 und im Wesentlichen parallel zu der Längsachse A2 des vierten Arms 2 und in zwei Bahnen schräg zu der Längsachse L des Torsionsbereichs 4 geführt. Der Faden 6 umwickelt somit die Längsachse A4 des vierten Arms 2 radial sowie die Längsachse A2 des zweiten Arms 2 radial sowie den Torsionsbereich 4 radial. Der Faden 6 ist in W-Form auf dem Kern 5 abgelegt. Dargestellt ist dies in einer xy- und einer yx-Ebene.

Selbstverständlich kann das vierte Wickelmuster 104 auch an der Längsachse L des Torsionsbereichs 4 gespiegelt abgelegt werden. Somit würde der Faden 6 im Wesentlichen parallel zu der Längsachse A1 des ersten Arms 2 sowie im Wesentlichen parallel zu der Längsachse A3 des dritten Arms 2 sowie in zwei Bahnen schräg zu der Längsachse L des Torsionsbereichs 4 geführt werden. Dieses vierte Wickelmuster 104 wurde bereits in Fig. 2 dargestellt.

Fig. 7 zeigt eine schematische Darstellung des Bauelements 1 aus Fig. 1 mit sichtbarem fünften Wickelmuster 105 in einer ersten Variante. Diese wurde bereits in Fig. 2 gezeigt. Der Faden 6 ist an dem ersten Arm 2 und an dem dritten Arm 2 als eine Kreuzwicklung pro Arm 2 und in zwei Bahnen schräg zu der Längsachse L des Torsionsbereichs 4 geführt. Die beiden Bahnen, die schräg zu der Längsachse L des Torsionsbereichs 4 angeordnet sind, dienen der Rückverankerung des Fadens 6 an dem Torsionsbereich 4. Die Kreuzwicklungen sind jeweils an der Außenseite des Bauelements 1 angeordnet. Dies ist in der xz-Ebene zu sehen. Sowohl der erste Arm 2 als auch der dritte Arm 2 weisen eine Kreuzwicklung auf. Selbstverständlich kann das fünfte Wickelmuster 105 auch gespiegelt an der Längsachse L des Torsionsbereichs 4 ausgeführt werden. In diesem Fall würden der vierte Arm 2 und der zweite Arm 2 jeweils eine Kreuzwicklung aufweisen.

Die Kreuzwicklungen sind nahe dem distalen Ende des jeweiligen Arms 2 angeordnet. Es weisen jeweils diejenigen Arme 2 des Bauelements 1 die Kreuzwicklungen auf, die sich an der Querachse Q des Torsionsbereichs 4 gegenüberliegen. Mittels des fünften Wickelmusters 105 in der ersten Variante wird ein Schubverband hergestellt. Durch diesen können Querkräfte an den Armen 2 des Bauelements 1 aufgenommen werden.

Fig. 8 zeigt eine schematische Darstellung des Bauelements 1 aus Fig. 1 mit sichtbarem fünften Wickelmuster 105 in einer zweiten Variante. Diese zweite Variante wurde ebenfalls in Fig. 2 dargestellt. Der Faden 6 ist hier in zwei Kreuzwicklungen pro Arm 2 und in zwei Bahnen, die schräg zu der Längsachse L des Torsionsbereichs 4 angeordnet sind, geführt. Eine erste Kreuzwicklung des ersten Arms 2 befindet sich dabei an der Außenseite des Bauelements 1 und eine zweite Kreuzwicklung desselben Arms 2 befindet sich dabei an der Innenseite des Bauelements 1. Dies gilt auch für den dritten Arm 2. Die Außenseite ist hierbei in der xz-Ebene dargestellt, die Innenseite hingegen in der zx-Ebene. Die Kreuzwicklungen an der Außenseite des Bauelements 1 sind nahe dem proximalen Ende des jeweiligen Arms 2 angeordnet und die Kreuzwicklung an der Innenseite des Bauelements 1 sind jedoch nahe dem distalen Ende des jeweiligen Arms 2 angeordnet. Sowohl der erste Arm 2 als auch der dritte Arm 2 weisen jeweils zwei Kreuzwicklungen auf.

Selbstverständlich kann das fünfte Wickelmuster 105 in der zweiten Variante gespiegelt an der Längsachse L des Torsionsbereichs 4 ausgeführt werden. In diesem Fall würden der vierte Arm 2 zwei Kreuzwicklungen und der zweite Arm 2 ebenfalls zwei Kreuzwicklungen aufweisen. Es weisen jeweils diejenigen Arme 2 des Bauelements 1 die Kreuzwicklungen auf, die sich an der Querachse Q des Torsionsbereichs 4 gegenüberliegen. Das fünfte Wickelmuster 105 in der zweiten Variante dient ebenso wie das fünfte Wickelmuster 105 in der ersten Variante, das in Fig. 7 dargestellt wurde, zur Herstellung eines Schubverbands.

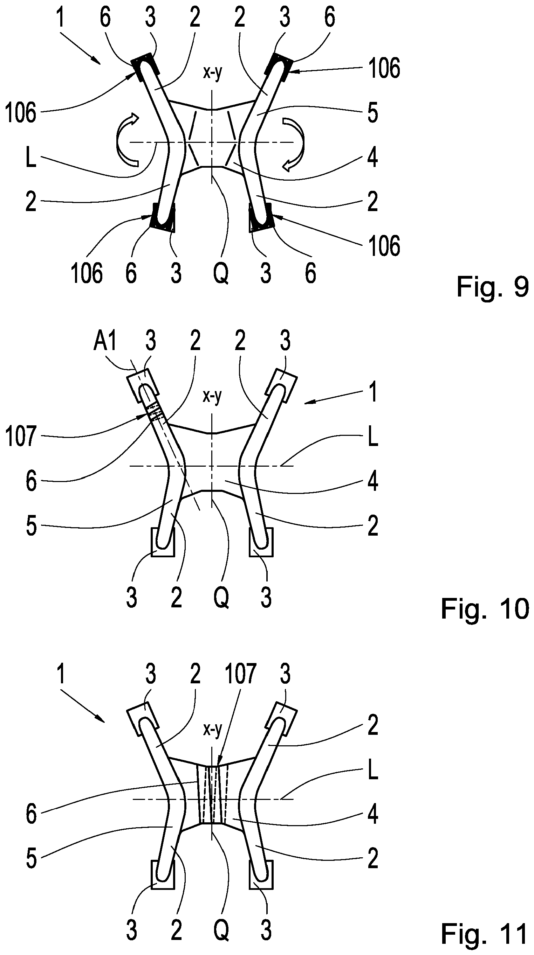

Fig. 9 zeigt eine schematische Darstellung des Bauelements 1 aus Fig. 1 mit sichtbarem sechsten Wickelmuster 106. Hier ist dargestellt, dass der Faden 6 vier Mal mittels des sechsten Wickelmusters 106 auf dem Kern 5 abgelegt ist. Dargestellt ist eine xy-Ebene des Bauelements 1. Bei diesem sechsten Wickelmuster 106 ist der Faden 6 als Ringwicklungen und Kreuzwicklungen um jede Buchse 3 herumgeführt. Damit werden die Buchsen 6 sicher an dem Kern 5 verankert. Mittels dieser Ring- und Kreuzwicklungen entsteht ein Kraftschluss sowie ein Formschluss zwischen den Buchsen 3 und dem Faden 6 und somit zwischen den Buchsen 3 und dem gesamten Laminat des Bauelements 1. Mittels des sechsten Wickelmusters 106 ist es möglich Quer- und Seitenkräfte in das Laminat des Bauelements 1 einzuleiten.

Fig. 10 zeigt schematische Darstellung des Bauelements 1 aus Fig. 1 mit sichtbarem siebten Wickelmuster 107 in einer ersten Variante. Dargestellt ist eine xy-Ebene des Bauelements 1. In dieser ersten Variante des siebten Wickelmusters 107 wird der Faden 6 als eine Umfangswicklung in O-Form um die Längsachse A1 des ersten Arms 2 herum geführt. Selbstverständlich kann der Faden 6 auch als Umfangswicklung um die Längsachse A2 des zweiten Arms 2 oder um die Längsachse A3 des dritten Arms 2 oder um die Längsachse A4 des vierten Arms 2 geführt werden. Selbstverständlich kann um jeden Arm 2 eine Umfangswicklung in O-Form nach dem siebten Wickelmuster 107 in der ersten Variante geführt werden. Der Faden 6 ist dabei im Wesentlichen senkrecht zu der Längsachse A1 des ersten Arms 2 ausgerichtet. Mittels des siebten Wickelmusters 107 in der ersten Variante wird das Laminat an den Armen 2 kompaktiert. Zudem wird eine geschlossene, ebene Oberfläche des Laminats des Bauelements 1 erzeugt.

Fig. 11 zeigt schematische Darstellung des Bauelements 1 aus Fig. 1 mit sichtbarem siebten Wickelmuster 107 in einer zweiten Variante. Dargestellt ist eine xy-Ebene des Bauelements 1. In dieser zweiten Variante des siebten Wickelmusters 107 wird der Faden 6 als eine Umfangswicklung um den Torsionsbereich 4 herumgewickelt. Dabei ist der Faden 6 im Wesentlichen senkrecht zu der Längsachse L des Torsionsbereichs 4. Mittels des siebten Wickelmusters 107 in der zweiten Variante wird das Laminat des Bauelements 1 im Bereich des Torsionsbereichs 4 kompaktiert. Zudem wird dadurch eine geschlossene und ebene Oberfläche hergestellt.

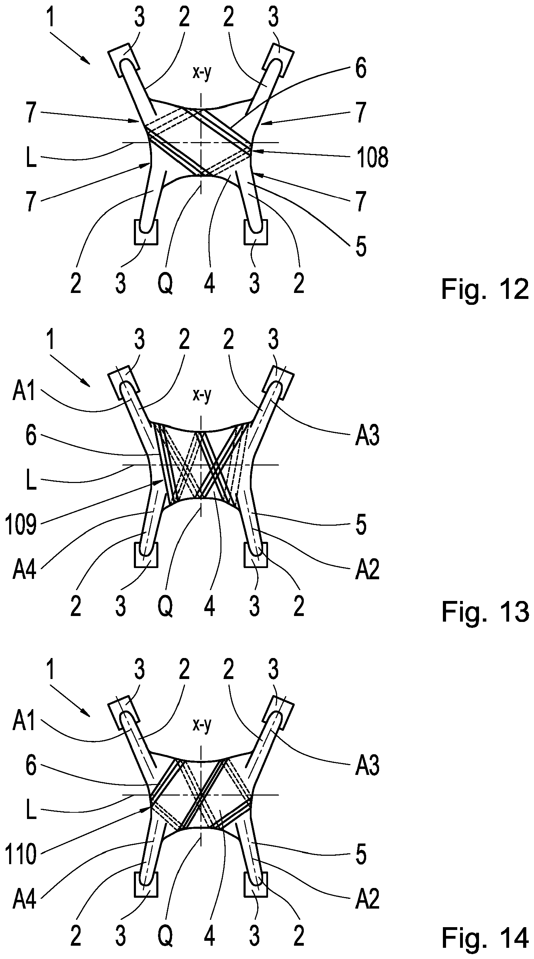

Fig. 12 zeigt schematische Darstellung des Bauelements 1 aus Fig. 1 mit sichtbarem achten Wickelmuster 108. Dargestellt ist eine xy-Ebene des Bauelements 1. Hierbei wird der Faden 6 in vier Bahnen schräg zu der Längsachse L des Torsionsbereichs 4 und schräg zu der Querachse Q des Torsionsbereichs 4 geführt. Der Faden wird radial um den Torsionsbereich 4 des Kerns 5 gewickelt. Dabei sind jeweils zwei Bahnen des Fadens 6 parallel zueinander angeordnet. Der Faden 6 wird daher in Form eines Parallelogramms auf dem Kern 5 abgelegt. Der Faden 6 weist dabei eine Ausrichtung von ca. 35° zu der Längsachse L des Torsionsbereichs 4 auf. Mittels des achten Wickelmusters 108 kann eine Schubsteifigkeit des Torsionsbereichs 4 gezielt eingestellt werden. Zudem kann eine Lastübernahme von den Armen 2 in den Torsionsbereich 4 erfolgen.

Fig. 13 zeigt schematische Darstellung des Bauelements 1 aus Fig. 1 mit sichtbarem neunten Wickelmuster 109. Dargestellt ist eine xy-Ebene des Bauelements 1. Dabei ist der Faden 6 derart abgelegt, dass dieser im Wesentlichen parallel zu der Längsachse A1 des ersten Arms 2 und im Wesentlichen parallel zu der Längsachse A3 des dritten Arms 2 ist. Der Faden 6 wird radial um den Torsionsbereich 4 des Kerns 5 geführt. Dies stellt wiederum eine Umfangswicklung dar. Der Faden 6 weist zum Beispiel einen ca. 60°-Winkel zu der Längsachse L des Torsionsbereichs 4 auf. Selbstverständlich kann das neunte Wickelmuster 109 auch gespiegelt an der Längsachse L des Torsionsbereichs 4 ausgeführt werden. In diesem Fall wäre der Faden 6 im Wesentlichen parallel zu der Längsachse A4 des vierten Arms 2 und im Wesentlichen parallel zu der Längsachse A2 des zweiten Arms 2 angeordnet. Mittels des neunten Wickelmusters 109 wird eine Schubsteifigkeit des Torsionsbereichs 4 erhöht.

Fig. 14 zeigt schematische Darstellung des Bauelements 1 aus Fig. 1 mit sichtbarem zehnten Wickelmuster 110. Dargestellt ist eine xy-Ebene des Bauelements 1. Bei diesem zehnten Wickelmuster 110 wird der Faden 6 an dem Torsionsbereich 4 im Wesentlichen parallel zu der Längsachse A3 des dritten Arms 2 geführt. Selbstverständlich kann das zehnte Wickelmuster 110 auch gespiegelt an der Längsachse L des Torsionsbereichs 4 ausgeführt werden. Weiterhin kann das zehnte Wickelmuster 110 auch gespiegelt an der Querachse Q des Torsionsbereichs 4 ausgeführt werden. Mittels des zehnten Wickelmusters 110 wird eine Schubsteifigkeit des Torsionsbereichs 4 erhöht.

### Bezugszeichen

- 1: Bauelement
- 2: Arm
- 3: Buchse
- 4: Torsionsbereich
- 5: Kern
- 6: Faden
- 7: Übergangsbereich

- 101: erstes Wickelmuster
- 102: zweites Wickelmuster
- 103: drittes Wickelmuster
- 104: viertes Wickelmuster
- 105: fünftes Wickelmuster
- 106: sechstes Wickelmuster
- 107: siebtes Wickelmuster
- 108: achtes Wickelmuster
- 109: neuntes Wickelmuster
- 110: zehntes Wickelmuster

- A1: Längsachse des ersten Arms
- A2: Längsachse des zweiten Arms
- A3: Längsachse des dritten Arms
- A4: Längsachse des vierten Arms
- L: Längsachse des Torsionsbereichs
- Q: Querachse des Torsionsbereichs

## Patentansprüche

1. Verfahren zum Herstellen eines Bauelements (1) mittels eines 3D-Wickelverfahrens, wobei das Bauelement (1) wenigstens zwei Arme (2), von welchen jeder eine Buchse (3) aufweist, und einen Torsionsbereich (4) aufweist, der mit den wenigstens zwei Armen (2) verbunden ist, **dadurch gekennzeichnet, dass**
- auf einem Kern (5) ein Faden (6) oder mehrere Parallelfäden aus einem Faserkunststoffverbundmaterial in einer Kombination von mehreren unterschiedlichen Wickelmustern (101, 102, 103, 104, 105, 106, 107, 108, 109, 110) abgelegt wird/werden,
- jeder Faden (6) vorimprägniert ist,
- jedes Wickelmuster (101, 102, 103, 104, 105, 106, 107, 108, 109, 110) wenigstens eine mechanische Eigenschaft des Bauelements (1) beeinflusst, und
- die mechanischen Eigenschaften des Bauelements (1) mittels der Abfolge, der Wiederholung, der Durchmischung und der Materialwahl der einzelnen Wickelmuster (101, 102, 103, 104, 105, 106, 107, 108, 109, 110) gezielt eingestellt werden.

2. Verfahren nach einem der vorherigen Ansprüche, **dadurch gekennzeichnet, dass** bei einem ersten Wickelmuster (101) der Faden (6) im Wesentlichen parallel zu einer Längsachse (A1, A2, A3, A4) eines der Arme (2) geführt wird.

3. Verfahren nach einem der vorherigen Ansprüche, **dadurch gekennzeichnet, dass** bei einem zweiten Wickelmuster (102) der Faden (6) im Wesentlichen parallel zu einer Längsachse (A1) eines ersten der Arme (2), im Wesentlichen parallel zu einer Längsachse (A2) eines zweiten der Arme (2) und in einer Bahn schräg zu einer Längsachse (L) des Torsionsbereichs (4) geführt wird, wobei diese beiden Arme (2) sich an der Längsachse (L) des Torsionsbereichs (4) gegenüberliegen.

4. Verfahren nach einem der vorherigen Ansprüche, **dadurch gekennzeichnet, dass** bei einem dritten Wickelmuster (103) der Faden (6) an den Übergangsbereichen (7) des Torsionsbereichs (4) zu den Armen (2) schräg zu der Längsachse (L) des Torsionsbereichs (4) geführt wird.

5. Verfahren nach einem der vorherigen Ansprüche, **dadurch gekennzeichnet, dass** bei einem vierten Wickelmuster (104) der Faden (6) im Wesentlichen parallel zu einer Längsachse (A1) eines ersten der Arme (2), im Wesentlichen parallel zu einer Längsachse (A3) eines dritten der Arme (2) und in zwei Bahnen schräg zu der Längsachse (L) des Torsionsbereichs (4) geführt wird, wobei diese beiden Arme (2) sich an einer Querachse (Q) des Torsionsbereichs (4) gegenüberliegen.

6. Verfahren nach einem der vorherigen Ansprüche, **dadurch gekennzeichnet, dass** bei einem fünften Wickelmuster (105) der Faden (6) an zwei Armen (2), die sich an der Querachse (Q) des Torsionsbereichs (4) gegenüberliegen, als wenigstens eine Kreuzwicklung pro Arm (2) und in zwei Bahnen schräg zu der Längsachse (L) des Torsionsbereichs (4) geführt wird.

7. Verfahren nach einem der vorherigen Ansprüche, **dadurch gekennzeichnet, dass** bei einem sechsten (106) Wickelmuster der Faden (6) als Ringwicklungen und Kreuzwicklungen um jede Buchse (3) geführt wird, wodurch diese an dem Kern (5) verankert werden.

8. Verfahren nach einem der vorherigen Ansprüche, **dadurch gekennzeichnet, dass** bei einem siebten Wickelmuster (107) der Faden (6) als Umfangswicklung um wenigstens einen der Arme (2) und/oder um den Torsionsbereich (4) geführt wird.

9. Verfahren nach einem der vorherigen Ansprüche, **dadurch gekennzeichnet, dass** bei einem achten Wickelmuster (108) der Faden (6) an dem Torsionsbereich (4) in vier Bahnen schräg zu der Längsachse (L) des Torsionsbereichs (4) und schräg zu der Querachse (Q) des Torsionsbereichs (4) geführt wird.

10. Verfahren nach einem der vorherigen Ansprüche, **dadurch gekennzeichnet, dass** bei einem neunten Wickelmuster (109) der Faden (6) an dem Torsionsbereich (4) im Wesentlichen parallel zu den Längsachsen (A1, A2, A3, A4) von wenigstens zwei der Arme (2) geführt wird.

11. Verfahren nach einem der vorherigen Ansprüche, **dadurch gekennzeichnet, dass** bei einem zehnten Wickelmuster (110) der Faden (6) an dem Torsionsbereich (4) im Wesentlichen parallel zu der Längsachse (A1, A2, A3, A4) eines der Arme (2) geführt wird.

12. Verfahren nach einem der vorherigen Ansprüche, **dadurch gekennzeichnet, dass** der Kern (5) an einem Roboterarm aufgenommen ist, wobei der Kern (5) während des Umwickelns mit dem Faden (6) von dem Roboterarm geführt wird.

13. Verfahren nach einem der Ansprüche 1 bis 11, **dadurch gekennzeichnet, dass** der Kern (5) an einer Achse aufgenommen ist, wobei der Faden (6) von einem Roboterarm geführt wird, um den Kern (5) mit dem Faden (6) zu umwickeln.

14. Bauelement (1), aufweisend wenigstens zwei Arme (2), von welchen jeder eine Buchse (3) aufweist, und einen Torsionsbereich (4), der mit den wenigstens zwei Armen (2) verbunden ist, **dadurch gekennzeichnet, dass** das Bauelement (1) nach einem Verfahren nach einem der Ansprüche 1 bis 14 hergestellt ist.

15. Bauelement (1) nach Anspruch 14, wobei das Bauelement (1) ein Bauelement (1) für ein Fahrwerk eines Fahrzeugs ist.

## Claims

1. Method for producing a component (1) by means of a 3D winding process, wherein the component (1) has at least two arms (2), each of which has a bushing (3), and a torsion region (4), which is connected to the at least two arms (2), **characterized in that**
- a thread (6) or multiple parallel threads composed of a fiber/plastic composite material is/are deposited on a core (5) in a combination of multiple different winding patterns (101, 102, 103, 104, 105, 106, 107, 108, 109, 110),
- each thread (6) is pre-impregnated,
- each winding pattern (101, 102, 103, 104, 105, 106, 107, 108, 109, 110) influences at least one mechanical property of the component (1), and
- the mechanical properties of the component (1) are set in a targeted manner by the sequence, the repetition, the mixing and the material selection of the individual winding patterns (101, 102, 103, 104, 105, 106, 107, 108, 109, 110).

2. Method according to the preceding claim, **characterized in that** a first winding pattern (101) involves the thread (6) being guided substantially parallel to a longitudinal axis (A1, A2, A3, A4) of one of the arms (2).

3. Method according to either of the preceding claims, **characterized in that** a second winding pattern (102) involves the thread (6) being guided substantially parallel to a longitudinal axis (A1) of a first of the arms (2), substantially parallel to a longitudinal axis (A2) of a second of the arms (2) and in a web obliquely with respect to a longitudinal axis (L) of the torsion region (4), wherein these two arms (2) are situated opposite one another in relation to the longitudinal axis (L) of the torsion region (4).

4. Method according to one of the preceding claims, **characterized in that** a third winding pattern (103) involves the thread (6) being guided on transition regions (7) of the torsion region (4) to the arms (2) obliquely with respect to the longitudinal axis (L) of the torsion region (4).

5. Method according to one of the preceding claims, **characterized in that** a fourth winding pattern (104) involves the thread (6) being guided substantially parallel to a longitudinal axis (A1) of a first of the arms (2), substantially parallel to a longitudinal axis (A3) of a third of the arms (2) and in two webs obliquely with respect to the longitudinal axis (L) of the torsion region (4), wherein these two arms (2) are situated opposite one another in relation to a transverse axis (Q) of the torsion region (4).

6. Method according to one of the preceding claims, **characterized in that** a fifth winding pattern (105) involves the thread (6) being guided on two arms (2), which are situated opposite one another in relation to the transverse axis (Q) of the torsion region (4), in the form of at least one cross winding per arm (2) and in two webs obliquely with respect to the longitudinal axis (L) of the torsion region (4).

7. Method according to one of the preceding claims, **characterized in that** a sixth winding pattern (106) involves the thread (6) being guided in the form of hoop windings and cross windings around each bushing (3), as a result of which these bushings are anchored to the core (5) .

8. Method according to one of the preceding claims, **characterized in that** a seventh winding pattern (107) involves the thread (6) being guided in the form of a circumferential winding around at least one of the arms (2) and/or around the torsion region (4).

9. Method according to one of the preceding claims, **characterized in that** an eighth winding pattern (108) involves the thread (6) being guided on the torsion region (4) in four webs obliquely with respect to the longitudinal axis (L) of the torsion region (4) and obliquely with respect to the transverse axis (Q) of the torsion region (4).

10. Method according to one of the preceding claims, **characterized in that** a ninth winding pattern (109) involves the thread (6) being guided on the torsion region (4) substantially parallel to the longitudinal axes (A1, A2, A3, A4) of at least two of the arms (2).

11. Method according to one of the preceding claims, **characterized in that** a tenth winding pattern (110) involves the thread (6) being guided on the torsion region (4) substantially parallel to the longitudinal axis (A1, A2, A3, A4) of one of the arms (2).

12. Method according to one of the preceding claims, **characterized in that** the core (5) is received on a robot arm, wherein the core (5) is guided by the robot arm during the winding around by the thread (6).

13. Method according to one of Claims 1 to 11, **characterized in that** the core (5) is received on an axis, wherein the thread (6) is guided by a robot arm in order for the core (5) to be wound around by the thread (6) .

14. Component (1) having at least two arms (2), each of which has a bushing (3), and a torsion region (4), which is connected to the at least two arms (2), **characterized in that** the component (1) is produced by a method according to one of Claims 1 to 13.

15. Component (1) according to Claim 14, wherein the component (1) is a component (1) for a chassis of a vehicle.

## Revendications

1. Procédé de fabrication d'un composant (1) au moyen d'un procédé d'enroulement 3D, le composant (1) comprenant au moins deux bras (2), parmi lesquels chacun comprend une douille (3), et une région de torsion (4) qui est reliée aux au moins deux bras (2), **caractérisé en ce que**
- sur un noyau (5), un fil (6) ou plusieurs fils parallèles constitué(s) d'un matériau composite en matière synthétique renforcée par des fibres est/sont déposé(s) dans une combinaison de plusieurs motifs d'enroulement (101, 102, 103, 104, 105, 106, 107, 108, 109, 110) différents,
- chaque fil (6) est préimprégné,
- chaque motif d'enroulement (101, 102, 103, 104, 105, 106, 107, 108, 109, 110) influence au moins une propriété mécanique du composant (1), et
- les propriétés mécaniques du composant (1) sont réglées de manière ciblée grâce à la séquence, la répétition, le mélange et la sélection des motifs d'enroulement (101, 102, 103, 104, 105, 106, 107, 108, 109, 110) individuels.

2. Procédé selon la revendication précédente, **caractérisé en ce que**, dans un premier motif d'enroulement (101), le fil (6) est guidé sensiblement parallèlement à un axe longitudinal (A1, A2, A3, A4) de l'un des bras (2).

3. Procédé selon l'une des revendications précédentes, **caractérisé en ce que**, dans un deuxième motif d'enroulement (102), le fil (6) est guidé sensiblement parallèlement à un axe longitudinal (A1) d'un premier des bras (2), sensiblement parallèlement à un axe longitudinal (A2) d'un deuxième des bras (2) et dans une bande de manière oblique par rapport à un axe longitudinal (L) de la région de torsion (4), ces deux bras (2) étant en regard au niveau de l'axe longitudinal (L) de la région de torsion (4).

4. Procédé selon l'une des revendications précédentes, **caractérisé en ce que**, dans un troisième motif d'enroulement (103), le fil (6) est guidé au niveau des régions de transition (7) de la région de torsion (4) par rapport aux bras (2) de manière oblique par rapport à l'axe longitudinal (L) de la région de torsion (4).

5. Procédé selon l'une des revendications précédentes, **caractérisé en ce que**, dans un quatrième motif d'enroulement (104), le fil (6) est guidé sensiblement parallèlement à un axe longitudinal (A1) d'un premier des bras (2), sensiblement parallèlement à un axe longitudinal (A3) d'un troisième des bras (2) et dans deux bandes de manière oblique par rapport l'axe longitudinal (L) de la région de torsion (4), ces deux bras (2) étant en regard au niveau d'un axe transversal (Q) de la région de torsion (4).

6. Procédé selon l'une des revendications précédentes, **caractérisé en ce que**, dans un cinquième motif d'enroulement (105), le fil (6) est guidé au niveau de deux bras (2) qui sont en regard au niveau de l'axe transversal (Q) de la région de torsion (4), sous la forme d'au moins un enroulement croisé par bras (2) et dans deux bandes de manière oblique par rapport à l'axe longitudinal (L) de la région de torsion (4).

7. Procédé selon l'une des revendications précédentes, **caractérisé en ce que**, dans un sixième motif d'enroulement (106), le fil (6) est guidé sous forme d'enroulements annulaires et d'enroulements croisés autour de chaque douille (3), de sorte que ceux-ci soient ancrés sur le noyau (5).

8. Procédé selon l'une des revendications précédentes, **caractérisé en ce que**, dans un septième motif d'enroulement (107), le fil (6) est guidé sous forme d'enroulement circonférentiel autour d'au moins l'un des bras (2) et/ou autour de la région de torsion (4).

9. Procédé selon l'une des revendications précédentes, **caractérisé en ce que**, dans un huitième motif d'enroulement (108), le fil (6) est guidé au niveau de la région de torsion (4) dans quatre bandes de manière oblique par rapport à l'axe longitudinal (L) de la région de torsion (4) et de manière oblique par rapport à l'axe transversal (Q) de la région de torsion (4).

10. Procédé selon l'une des revendications précédentes, **caractérisé en ce que**, dans un neuvième motif d'enroulement (109), le fil (6) est guidé au niveau de la région de torsion (4) sensiblement parallèlement aux axes longitudinaux (A1, A2, A3, A4) d'au moins deux des bras (2).

11. Procédé selon l'une des revendications précédentes, **caractérisé en ce que**, dans un dixième motif d'enroulement (110), le fil (6) est guidé au niveau de la région de torsion (4) sensiblement parallèlement à l'axe longitudinal (A1, A2, A3, A4) de l'un des bras (2).

12. Procédé selon l'une des revendications précédentes, **caractérisé en ce que** le noyau (5) est reçu sur un bras de robot, le noyau (5) étant guidé par le bras de robot pendant que le fil (6) est enroulé autour de celui-ci.

13. Procédé selon l'une des revendications 1 à 11, **caractérisé en ce que** le noyau (5) est reçu sur un axe, le fil (6) étant guidé par un bras de robot, afin d'enrouler le fil (6) autour du noyau (5).

14. Composant (1), comprenant au moins deux bras (2), parmi lesquels chacun comprend une douille (3), et une région de torsion (4) qui est reliée aux au moins deux bras (2), **caractérisé en ce que** le composant (1) est fabriqué selon un procédé selon l'une des revendications 1 à 13.

15. Composant (1) selon la revendication 14, le composant (1) étant un composant (1) pour un châssis d'un véhicule.
